# EUROPÄISCHE PATENTSCHRIFT

(11) **EP 2 718 211 B1**
(45) Veröffentlichungstag und Bekanntmachung des Hinweises auf die Patenterteilung: **30.09.2015**
(21) Anmeldenummer: 11764589.5
(22) Anmeldetag: 06.10.2011
(51) Int. Cl.: B65G 43/08, B65G 47/14

(54) **VORRICHTUNG ZUM VEREINZELN VON IN EIN AUTOMATISIERTES LAGER EINZULAGERNDEN STÜCKGÜTERN**
DEVICE FOR SEPARATING PIECE GOODS TO BE STORED IN AN AUTOMATED STORAGE FACILITY
DISPOSITIF DE SÉPARATION DE COLIS ISOLÉS DEVANT ÊTRE STOCKÉS DANS UN ENTREPÔT AUTOMATISÉ

(30) Priorität: 07.06.2011 EP 11169016
(43) Veröffentlichungstag der Anmeldung: 16.04.2014
(73) Patentinhaber: CareFusion Germany 326 GmbH, 53539 Kelberg (DE)
(72) Erfinder: HELLENBRAND, Christoph, 56761 Kaifenheim (DE); FURTNER, Uwe, 74182 Obersulm (DE); BOESNACH, Ingo, 76337 Waldbronn (DE); HÖSCHLE, Frank, 71570 Oppenweiler (DE); CARBONELL ZARAGOZA, Marta, 70176 Stuttgart (DE)
(74) Vertreter: Zenz Patentanwälte Partnerschaft mbB
(86) Internationale Anmeldenummer: PCT/EP2011/067520
(87) Internationale Veröffentlichungsnummer: WO 2012/167846

(56) Entgegenhaltungen:
- WO-A1-2008/031648
- DE-A1-102004 012 133
- US-B1- 6 471 044

## Beschreibung

Die Erfindung betrifft eine Vorrichtung zum Vereinzeln von in ein automatisiertes Lager einzulagernden Stückgütern mit einer Fördervorrichtung zum Fördern von Stückgütern aus einem Vorrat auf eine Auflagefläche einer Auffangeinrichtung, einer Steuereinrichtung zum Ansteuern der Fördervorrichtung, einem mit der Steuereinrichtung gekoppelten Sensor, der ein Auftreffen von Stückgütern auf der Auflagefläche erfasst, wobei die Steuereinrichtung das Fördern weiterer Stückgüter auf die Auflagefläche unterbricht, sobald das Auftreffen eines Stückguts oder mehrerer Stückgüter erfasst worden ist, einer mit der Steuereinrichtung gekoppelten Erfassungseinrichtung zum Erfassen von Position und Lage der auf der Auflagefläche aufliegenden Stückgüter, wobei die Erfassungseinrichtung eine Bildaufnahmeeinrichtung aufweist, die wenigstens Aufnahmen der Unterseite der Auffangeinrichtung erzeugt, aus der die Steuereinrichtung Informationen über Position und Lage der aufliegenden Stückgüter gewinnt, und einer mit der Steuereinrichtung gekoppelten Handhabungseinrichtung zum Entnehmen eines Stückguts von der Auflagefläche für einen Weitertransport in das Lager, wobei die Steuereinrichtung die Handhabungseinrichtung in Abhängigkeit von den Informationen über Position und Lage gezielt derart steuert, dass sie ein einzelnes Stückgut ergreift.

Eine Vereinzelungsvorrichtung nach dem Oberbegriff des Anspruchs 1 ist aus der Offenlegungsschrift DE 10 2004 012 133 Al bekannt. Die bekannte Vereinzelungsvorrichtung wird insbesondere verwendet, um eine größere Anzahl quaderförmiger Stückgüter verschiedenster Abmessungen, insbesondere von Arzneimittelpackungen, die sich zunächst in einem Aufnahmebunker befinden, derart vereinzelt zur Verfügung zu stellen, dass diese nach Erfassung ihrer Abmessungen und nach Identifikation in ein automatisiertes Lager eingelagert werden können. Bei der bekannten Vorrichtung fördert beispielsweise ein Stufenförderer oder ein Förderband mit Querstegen die Packungen nacheinander aus den Bunker schräg nach oben, so dass die Packungen über eine Oberkante des Stufenförderers oder des Förderbands übertreten und dann auf eine Auflagefläche fallen. Die Auflagefläche ist die Oberseite einer Platte aus einem durchsichtigen oder durchscheinenden Material, beispielsweise aus Glas. Eine unter der Platte angeordnete Digitalkamera erzeugt eine Aufnahme, wobei die Kamera so fokussiert ist, dass sie die mit den quaderförmigen Stückgütern belegte Oberseite von unten aufnimmt. Aus der so gewonnenen Aufnahme werden sowohl identifizierende Informationen der aufliegenden Packungen als auch deren Lage und Position ermittelt. Unter Verwendung der so ermittelten Daten wird ein von oben auf die Packungen zugreifender Greifer angesteuert, der einzelne Packungen entnimmt und dem automatisierten Lager zuführen kann.

Nachteilig bei der bekannten Vereinzelungsvorrichtung sind einerseits die relativ komplizierte Bildverarbeitung und andererseits Fehler bei der Erfassung von Position und Lage, die durch einen Strahlversatz aufgrund der Brechung des Lichtes an den Grenzflächen der Glasplatte auftreten können.

In der Gebrauchsmusterschrift DE 20 2004 015 264 U1 wurde vorgeschlagen, die Fehler bei der Erfassung von Lage und Position dadurch zu verringern, dass anstelle der Glasplatte eine dünne Auflage (Folie oder Tuch) verwendet wird, die für Licht teilweise durchlässig ist und an der das hindurchtretende Licht wenigstens teilweise diffus gestreut wird. Beispielsweise soll als Auflage ein gespanntes Tuch verwendet werden. Außerdem wird vorgeschlagen, oberhalb der Auflage eine oder mehrere Lichtquellen so auszubilden und anzuordnen, dass das Licht der Lichtquelle bzw. der Lichtquellen diffus aus allen Richtungen auf die gesamte Oberseite der Auflage mit Ausnahme der Auflageflächen der aufliegenden Stückgüter auftrifft. Das Licht wird durch eine Reihe von Reflektor- oder Diffusorflächen reflektiert bzw. gestreut, so dass bei nahezu allen denkbaren Anordnungen der Stückgüter auf der Auflage in jedem Bildbereich der Auflage mit Ausnahme der durch die Stückgüter-Auflageflächen bedeckten Flächen eine Mindest-Beleuchtungsstärke vorhanden ist, also insbesondere keine Kernschatten auftreten können.

Nachteilig bei dem Vorschlag dieses Gebrauchsmusters ist der relativ komplizierte und unzuverlässige Aufbau der Auflage und der Lichtquellen. Außerdem hat sich gezeigt, dass es relativ kompliziert ist, die Lichtquellen bzw. Diffusor- und Reflektorflächen so anzuordnen, dass Fehlerkennungen bei der Position und Lage mehrerer aufliegender Stückgüter vermieden werden.

Ausgehend von diesem Stand der Technik liegt der Erfindung die Aufgabe zugrunde, eine baulich relativ einfache Vorrichtung zum vereinzeln zu schaffen, bei der die Wahrscheinlichkeit verringert wird, dass benachbart auf der Auflage aufliegende Stückgüter nicht korrekt erkannt und unterschieden werden.

Diese Aufgabe wird erfindungsgemäß durch eine Vorrichtung zum Vereinzeln mit den Merkmalen des Anspruchs 1 gelöst.

Die Erfindung geht von einer Vorrichtung der eingangs genannten Art aus. Diese Vorrichtung zum Vereinzeln von in ein automatisiertes Lager einzulagernden Stückgütern weist zunächst eine Fördervorrichtung zum Fördern von Stückgütern aus einem Vorrat auf eine Auflagefläche einer Auffangeinrichtung auf. Eine solche Fördervorrichtung kann beispielsweise ein Bandförderer oder - vorzugsweise - ein Stufenförderer sein. Der Vorrat wird beispielsweise in einem Bunker gehalten. Die Vereinzelungsvorrichtung weist ferner eine Steuereinrichtung zum Ansteuern der Fördervorrichtung auf, wobei diese Steuereinrichtung vorzugsweise einen Computer umfasst. Ein mit der Steuereinrichtung gekoppelter Sensor ist vorgesehen, der ein unmittelbar bevorstehendes oder tatsächliches Auftreffen von Stückgütern auf der Auflagefläche erfasst. Hierbei soll unter einem Erfassen eines "unmittelbar bevorstehenden" Auftreffens eines Stückguts auf der Auflagefläche auch beispielsweise das Erfassen eines Fallens oder Kippens von einem oberen Rand der Fördereinrichtung in Richtung der Auflagefläche der Auffangeinrichtung verstanden werden. Die Steuereinrichtung unterbricht das Fördern weiterer Stückgüter auf die Auflagefläche, sobald das (unmittelbar bevorstehende oder tatsächliche) Auftreffen eines Stückguts oder mehrerer Stückgüter auf der Auflagefläche erfasst worden ist. Als Sensor kann beispielsweise eine Lichtschranke oder ein Annäherungssensor verwendet werden. Beispielsweise wird das Auftreffen mehrerer Stückgüter erfasst, wenn diese gleichzeitig oder annähernd gleichzeitig von der Fördervorrichtung auf die Auflagefläche befördert werden. Die Vorrichtung weist ferner eine mit der Steuereinrichtung gekoppelte Erfassungseinrichtung zum Erfassen von Position und Lage der auf der Auflagefläche aufliegenden Stückgüter auf, wobei die Erfassungseinrichtung eine Bildaufnahmeeinrichtung, beispielsweise eine Kamera, aufweist, die wenigstens eine Aufnahme der Unterseite der Auflagefläche der Auffangeinrichtung erzeugt, aus der die Steuereinrichtung Informationen über Position und Lage der aufliegenden Stückgüter gewinnt. Hierbei umfasst der Begriff "Position und Lage" sowohl der Auflageort als auch die Orientierung und die senkrecht auf die Auflagefläche projizierte Kontur des aufliegenden Stückguts. Eine mit der Steuereinrichtung gekoppelte Handhabungseinrichtung dient zum Entnehmen eines Stückguts von der Auflagefläche für einen Weitertransport in das Lager, wobei die Steuereinrichtung die Handhabungseinrichtung in Abhängigkeit von den Informationen über Position und Lage gezielt derart steuert, dass sie ein einzelnes Stückgut sicher ergreift. Diese Handhabungseinrichtung weist beispielsweise einen Backengreifer, aber vorzugsweise einen Sauggreifer auf. Ein "sicheres" Ergreifen meint hier, dass das Stückgut gegen Verrutschen in der Handhabungseinrichtung oder gegen ein Herausfallen aus der Greifeinrichtung gesichert sein soll.

Eine Vorrichtung der eingangs genannten Art ist erfindungsgemäß dadurch gekennzeichnet, dass die Erfassungseinrichtung eine oberhalb der Auflagefläche angeordnete Lichtquelle aufweist, die wenigstens ein ausschließlich senkrecht auf die Auflagefläche auftreffendes Lichtbündel erzeugt, wobei das wenigstens eine Lichtbündel entweder die gesamte zu erfassende Auflagefläche abdeckt oder so bewegt wird, dass sukzessive die gesamte zu erfassende Auflagefläche überstrichen wird, und dass die Auffangeinrichtung so ausgebildet ist, dass sie das durch die Auflagefläche hindurchtretende Licht der Lichtquelle durchlässt und dabei an jedem Ort der Auflagefläche derart streut oder ablenkt, dass zumindest ein Teil des hindurchtretenden Lichts zu der Bildaufnahmeeinrichtung gelenkt wird. Beispielsweise weist die Auffangeinrichtung unterhalb der Auflagefläche ein Material auf, das das Licht der Lichtquelle durchlässt und dabei diffus streut. Unter einem "senkrechten" Auftreffen eines Lichtbündels soll auch ein solches Auftreffen verstanden werden, bei dem die Auftreffrichtung um einen geringen tolerierbaren Winkel von der Senkrechten der Auflagefläche abweicht, beispielsweise um wenige Grad, wie dies insbesondere in den Randbereichen eines Lichtbündels mit sehr geringer Divergenz der Fall ist.

Kerngedanke der Erfindung ist das Abtasten der Auflagefläche mit Hilfe eines oder mehrerer senkrecht auf die Oberfläche der Auflagefläche auftreffender Lichtbündel, die von einer Lichtquelle ausgehen, deren Abstand von der Auflagefläche größer ist als die größte zu erwartende Höhe eines auf der Auflagefläche aufliegenden Stückguts, so dass eine Projektion der Kontur des aufliegenden Stückguts abgebildet werden kann. Eine derartige Gestaltung der Lichtquelle vermeidet zuverlässig Abschattungen von schmalen Lücken zwischen benachbart auf der Auflagefläche aufliegenden Stückgütern und gestattet nicht nur die Erfassung der Kontur quaderförmiger Stückgüter, sondern auch der Kontur zylindrischer Stückgüter, die mit ihrer Mantelfläche aufliegen, wie beispielsweise Dosen oder Flaschen.

Bei einer bevorzugten Ausführungsform der erfindungsgemäßen Vorrichtung umfasst die Auffangeinrichtung eine ebene Platte, deren Oberseite die Auffangfläche bildet. Hierbei kann es vorgesehen sein, dass die Platte zunächst (in ihrer Grundstellung) nicht horizontal angeordnet, sondern geneigt ist, d.h. von der Fördervorrichtung weg abfällt, so dass auf der Auflagefläche auftreffende Stückgüter zunächst die geneigte Ebene hinabrutschen oder -rollen. Eine mit der Steuereinrichtung gekoppelte Stellvorrichtung ist so ausgebildet, dass sie die Platte schnell in eine horizontale Position bewegen kann. Sobald der Sensor ein Auftreffen eines Stückguts auf der Auflagefläche erfasst und dies der Steuereinrichtung gemeldet hat, veranlasst die Steuereinrichtung eine Stellbewegung der Stellvorrichtung, so dass die Auflagefläche in die horizontale Position bewegt und das Rutschen des Stückguts gebremst wird. Nach der Entnahme des Stückguts von der Auflagefläche wird diese wieder in die geneigte Grundstellung zurück bewegt.

Vorzugsweise erzeugt die oberhalb der Auflagefläche angeordnete Lichtquelle eine Mehrzahl ausschließlich senkrecht auf die Auflagefläche auftreffender Lichtbündel, wobei benachbarte Lichtbündel höchstens einen einer gewünschten Auflösung entsprechenden Maximalabstand voneinander haben. Dies beschleunigt das Abtasten (oder Abrastern) der Auflagefläche.

Bei einer bevorzugten Weiterbildung dieser Ausführungsform der erfindungsgemäßen Vorrichtung ist es vorgesehen, dass die Lichtquelle bewegbar ist, wobei die Lichtbündel einen sich in einer ersten Richtung über die Auflagefläche erstreckenden Streifen belichten, wobei die Steuereinrichtung die bewegbare Lichtquelle so steuert, dass der belichtete Streifen sich in einer zu ersten Richtung senkrechten zweiten Richtung über die Auflagefläche bewegt. "Senkrecht" schließt hierbei eine tolerierbare Winkelabweichung vom rechten Winkel von wenigen Grad ein. Die bevorzugte Vorrichtung gestattet eine relativ einfache zeilenförmige Gestaltung der Lichtquelle, wobei die dicht benachbart angeordneten Lichtbündel einen Streifen auf der Auflagefläche belichten. Die Lichtquelle wird dann in der Art eines Scanners in der Längsrichtung über die Auflagefläche hinweg bewegt. Dabei soll hier unter einem Bewegen der Lichtquelle sowohl ein Bewegen der Licht aussendenden Bauelemente selbst als auch ein Bewegen eines Strahllenkmechanismus (beispielsweise eines Reflektors) verstanden werden. Die den Streifen bildenden Lichtbündel treffen vorzugsweise gleichzeitig parallel auf der Auflagefläche auf; es ist aber auch denkbar, dass Lichtbündel mit hoher Geschwindigkeit entlang des Streifens bewegt werden, wobei deren Scangeschwindigkeit wesentlich größer als die Geschwindigkeit der Bewegung des belichteten Streifens in der zweiten Richtung ist.

Wenn im Rahmen dieser Erfindung davon gesprochen wird, dass die die Auflagefläche tragende Platte das Licht der Lichtquelle durchlässt und dabei diffus streut, so soll darunter verstanden werden, dass zumindest ein wesentlicher Anteil der Lichtstrahlung durchgelassen und von diesem durchgelassenen Anteil ein wesentlicher Anteil diffus gestreut wird. Es ist für das Funktionieren der Erfindung nicht wesentlich, ob ein Teil des Lichts der Lichtquelle von der Auflagefläche reflektiert oder von der Platte absorbiert wird. Ebenso ist es von untergeordneter Bedeutung, ob die diffuse Streuung tatsächlich vollständig diffus ist, oder ob ein größerer Anteil des Lichts geringer gestreut wird.

Bei einer bevorzugten Ausführungsform der erfindungsgemäßen Vorrichtung ist es vorgesehen, dass die Bildaufnahmeeinrichtung während des Bewegens des belichteten Streifens eine Folge von Aufnahmen der Unterseite der Auflagefläche erzeugt, aus denen eine Abbildung der Auflagefläche erzeugt wird, aus der die zur Ansteuerung der Handhabungseinrichtung erforderlichen Informationen über Position und Lage der aufliegenden Stückgüter gewonnen werden, wobei der zeitliche Abstand der Aufnahmen derjenigen Zeitdauer entspricht, in der sich der belichtete Streifen um eine Distanz bewegt, die etwa seiner Breite entspricht. Zu jeder um die Breite versetzten Position des belichteten Streifens wird eine Gesamtaufnahme der Auflagefläche gewonnen. Diese Bilder werden mit einem geeigneten Algorithmus zu einem Gesamtbild zusammengesetzt. Ein Teil der Verarbeitung kann bereits in der Bildaufnahmeeinrichtung vorgenommen werden. Dieses Zusammensetzen von Bildfolgen könnte auch dann ausgeführt werden, wenn die Lichtquelle keinen belichteten Streifen, sondern einen Einzelfleck erzeugt. Es sind dann entsprechend mehr Aufnahmen zusammenzusetzen.

Alternativ ist es denkbar, dass die Bildaufnahmeeinrichtung während des Bewegens des belichteten Streifens eine Folge von 20 bis mehreren Hundert jeweils nur eindimensionalen, sich in der ersten Richtung erstreckenden Zeilenaufnahmen erzeugt, aus denen eine Abbildung der Auflagefläche erzeugt wird, aus der die zur Ansteuerung der Handhabungseinrichtung erforderlichen Informationen über Position und Lage der aufliegenden Stückgüter gewonnen werden. Beispielsweise werden bei einer Ausführungsform dieser Alternative während des Bewegens des belichteten Streifens in der zweiten Richtung 20 bis 50 Zeilenaufnahmen erzeugt. Aus diesen Zeilenaufnahmen setzt die Steuereinrichtung eine Abbildung der Auflagefläche zusammen, woraus programmgesteuert die Informationen über Position und Lage der jeweils aufliegenden Stückgüter abgeleitet werden können. Diese Vorgehensweise reduziert die zu verarbeitenden Bilddaten bei gleichzeitiger Aufrechterhaltung der erforderlichen Genauigkeit bei der Bestimmung der die Position und Lage kennzeichnenden Informationen, erfordert aber eine Koordination der Steuerung der Bewegung der Lichtquelle mit dem Prozess des Zusammensetzens der Streifenaufnahmen und somit eine Erfassung der Position des belichteten Streifens sowie einen erhöhten Steuerungsaufwand.

Eine bevorzugte Ausführungsform der erfindungsgemäßen Vorrichtung zum Vereinzeln ist dadurch gekennzeichnet, dass die Lichtquelle eine Infrarotlichtquelle ist und die Platte einen das Infrarotlicht durchlassenden und dabei diffus streuenden Kunststoff aufweist.

Vorzugsweise umfasst die Infrarotlichtquelle eine Vielzahl von Infrarot-LEDs, die auf einem Träger entlang der ersten Richtung in gleichmäßigen Abständen nebeneinander angeordnet sind, wobei jede Infrarot-LED ein Lichtbündel mit einem Öffnungswinkel von weniger als 5° abstrahlt. Vorzugsweise werden Infrarot-LEDs mit einem Öffnungswinkel von 1 bis 2° verwendet. Bei dem Träger handelt es sich beispielsweise um eine Leiterplatine, auf der die LEDs montiert sind. Die Abstände der LEDs entsprechen dem durch die Auflösung vorgegebenen Maximalabstand der Lichtbündel. Dieser beträgt beispielsweise 3 bis 6 mm.

Bei einer bevorzugten Ausführungsform der erfindungsgemäßen Vorrichtung strahlen die Infrarot-LEDs die Lichtbündel senkrecht nach unten ab und ist der Träger in der zweiten Richtung bewegbar. Bei dieser Ausführungsform werden die Lichtstrahlungsquellen selbst in der zweiten Richtung bewegt. Bei einer alternativen Ausführungsform strahlen die Infrarot-LEDs die Lichtbündel beispielsweise horizontal ab und ist ein parallel zu einem feststehenden Träger der LEDs angeordneter, die horizontalen Lichtbündel vertikal nach unten umlenkender Spiegel in der zweiten Richtung bewegbar angeordnet.

Bei einer bevorzugten Ausführungsform der erfindungsgemäßen Vorrichtung erstreckt sich die erste Richtung quer zur Transportrichtung der Fördervorrichtung, aus der die Stückgüter auf die Auflagefläche eintreffen. Vorzugsweise befindet sich anfangs der durch die vertikalen Lichtbündel gebildete Streifen unmittelbar benachbart zum Ende der Fördervorrichtung. Nachdem das Stückgut oder die Stückgüter auf die Auflagefläche transportiert worden sind, wird der belichtete Streifen in der zweiten Richtung über die Stückgüter hinweg bewegt.

Bei einer Weiterbildung der erfindungsgemäßen Vorrichtung steuert die Steuereinrichtung die bewegbare Lichtquelle derart, dass sich der belichtete Streifen stetig einmal über die gesamte Auflagefläche hinwegbewegt. Während dieser kontinuierlichen Bewegung des Streifens nimmt die Bildaufnahmeeinrichtung in äquidistanten zeitlichen Abständen eine Folge von Bildern auf. Die aufgenommenen Bilder werden sukzessive zur Abbildung der Auflagefläche zusammengesetzt.

Eine bevorzugte Ausführungsform der erfindungsgemäßen Vorrichtung zum Vereinzeln ist dadurch gekennzeichnet, dass die Handhabungseinrichtung an einer über der Auflagefläche montierten, sich in der zweiten Richtung erstreckenden Linearführung aufgehängt und geführt ist, und dass die Lichtquelle an derselben Linearführung aufgehängt und geführt ist. Dies vereinfacht die konstruktive Gestaltung der Vereinzelungsvorrichtung, da eine Linearführung sowohl zur Führung der Handhabungseinrichtung als auch der Lichtquelle verwendet werden kann. Diese Ausführungsform macht sich den Umstand zu nutze, dass üblicherweise zunächst die Lichtquelle über die Auflagefläche hinweggeführt wird, um Position und Lage der aufliegenden Stückgüter zu erfassen, dann die Lichtquelle an ihrer Ausgangsposition am Rand der Auflagefläche zurückgefahren wird, so dass anschließend die Linearführung in ihrer gesamten Länge für den Transport der Handhabungseinrichtung zur Verfügung steht. Zusätzlich kann vorgesehen sein, dass die Handhabungseinrichtung und die Lichtquelle denselben Antrieb nutzen, ja sogar miteinander verbunden sind. Dies reduziert die Kosten der Steuerung.

Vorteilhafte und/oder bevorzugte Weiterbildungen der Erfindung sind in den Unteransprüchen gekennzeichnet.

Im Folgenden wird die Erfindung anhand eines in den Zeichnungen dargestellten bevorzugten Ausführungsbeispiels näher erläutert. In den Zeichnungen zeigen:
Figur 1 einen schematischen Aufbau der erfindungsgemäßen Vereinzelungsvorrichtung; und
Figur 2 eine schematische Draufsicht auf die an den Linearführungen geführten Lichtquelle mit der darunter angeordneten Auflagefläche.

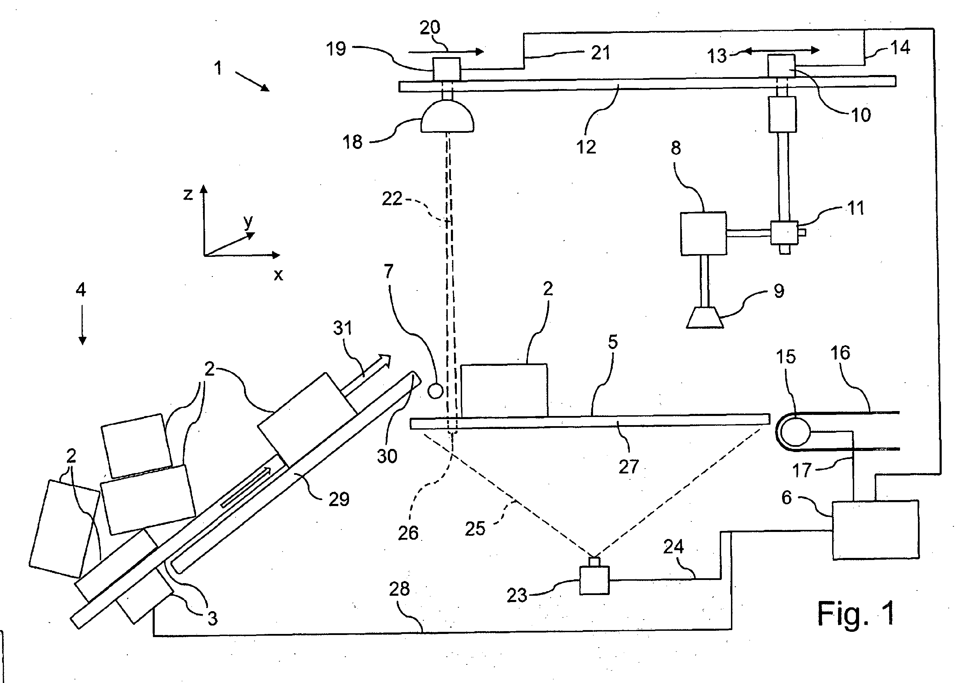

Figur 1 zeigt eine schematische Darstellung der erfindungsgemäßen Vereinzelungsvorrichtung 1. Die Vereinzelungsvorrichtung 1 besteht aus vier Hauptkomponenten, einer Fördervorrichtung 3 zum Fördern von Stückgütern 2 aus einem Vorrat 4 auf eine Auflagefläche 5, einem Steuercomputer 6, einer mit dem Steuercomputer 6 gekoppelten Erfassungseinrichtung zum Erfassen von Position und Lage (einschließlich projizierter Kontur) der auf der Auflagefläche 5 aufliegenden Stückgüter 2 und einer mit dem Steuercomputer 6 gekoppelten Handhabungseinrichtung zum Entnehmen eines Stückguts von der Auflagefläche 5 für einen Weitertransport in das Lager. Die Erfassungseinrichtung zum Erfassen von Position und Lage der auf der Auflagefläche 5 aufliegenden Stückgüter 2 umfasst eine unter der Auflagefläche 5 angeordnete Bildaufnahmeeinrichtung 23 und eine über der Auflagefläche 5 angeordnete Infrarot-Lichtquelle 18, wobei die Infrarot-Lichtquelle 18 zum Belichten der Auflagefläche 5 und die Bildaufnahmeeinrichtung 23 zum Aufnehmen der bei dem Belichten entstehenden Abbildungen dient. Diese Komponenten seien nachfolgend zusammen mit ihren Funktionen näher beschrieben.

Zunächst befinden sich eine große Anzahl unterschiedlich geformter und unterschiedlich großer Stückgüter, insbesondere Arzneimittelpackungen 2, in einem Vorratsraum 4, bei dem es sich beispielsweise um einen oben offenen Behälter oder Bunker handelt. Aus diesem Vorrat 4 werden die Arzneimittelpackungen 2 mittels eines Stufenförderers 3 schräg nach oben gefördert. Der Stufenförderer 3 umfasst eine Auflageplatte 29 mit einem oberen Rand 30. Über der Auflageplatte 29 wird eine Stufe mit einer Förderkante parallel zur Auflageplatte 29 von unten nach oben bewegt, wobei diese Bewegung des Stufenförderers 3 von dem Steuercomputer 6 gesteuert wird. In Figur 1 ist eine Verbindungsleitung 28 zwischen dem Steuercomputer 6 und einem Steuerantrieb des Stufenförderers 3, der die nach oben zu schiebende Stufe antreibt, gezeigt. Die Bewegung der Stufe ist durch einen dünnen Pfeil veranschaulicht. Eine auf der Auflageplatte 29 aufliegende Arzneimittelpackung 2 wird von der Förderkante der Stufe nach oben geschoben, was durch den Pfeil 31 angezeigt ist. Die Arzneimittelpackung 2 wird solange geschoben, bis sie über die Oberkante 30 hinwegtritt und dann auf die Auflagefläche 5 kippt oder fällt. Dieses Auftreffen der Arzneimittelpackung 2 auf der Auflagefläche 5 wird durch einen Sensor 7 erfasst, bei dem es sich beispielsweise um eine parallel zur Oberkante 30 des Stufenförderers 3 angeordnete Lichtschranke handelt. Es sind aber andere Sensoranordnungen, wie beispielsweise Berührungssensoren denkbar. Die Breite des Stufenförderers 3 ist dabei so gewählt, dass sie etwas geringer ist als die Breite der Auflagefläche 5. Darüber hinaus ist die Breite an das zu erwartende Größenspektrum der Arzneimittelpackungen 2 angepasst. Bei jedem Hochschieben der Stufe aus dem Vorrat hin zur Oberkante 30 wird eine oder werden mehrere Arzneimittelpackungen von der Förderkante der Stufe über die Oberkante 30 der Auflageplatte 29 hinweggeschoben.

Die Auflagefläche 5 ist vorzugsweise von der Oberseite einer ebenen Platte 27 gebildet. Die Platte 27 ist zunächst in ihrer (in Figur 1 nicht dargestellten) Grundstellung geneigt, d.h. sie fällt von der Fördervorrichtung 3 weg ab, so dass auf der Auflagefläche 5 auftreffende Stückgüter 2 zunächst eine geneigte Ebene hinabrutschen oder -rollen. Eine mit der Steuereinrichtung 6 gekoppelte Stellvorrichtung ist so ausgebildet, dass sie die Platte 27 schnell in eine horizontale Position bewegen kann. Sobald der Sensor 7 ein (bevorstehendes) Auftreffen eines Stückguts 2 auf der Auflagefläche 5 erfasst und dies der Steuereinrichtung 6 gemeldet hat, veranlasst die Steuereinrichtung 6 eine Stellbewegung der Stellvorrichtung, so dass die Auflagefläche 5 in die horizontale Position (in Figur 1 dargestellt) bewegt und das Rutschen des Stückguts 2 gebremst wird. Nach der Entnahme des Stückguts 2 von der Auflagefläche 5 wird diese wieder in die geneigte Grundstellung zurück bewegt.

Nachdem mit dem Sensor 7 erfasst worden ist, dass eine Arzneimittelpackung 2 oder gleichzeitig mehrere Arzneimittelpackungen 2 auf der Auflagefläche 5 der Platte 27 eingetroffen sind, sorgt der Steuercomputer 6 dafür, dass der Stufenförderer 3 keine weiteren Arzneimittelpackungen 2 fördert, d.h. seine Förderstufe nach unten zurückgefahren wird. Ferner aktiviert der Steuercomputer 6 die Erfassungseinrichtung zum Erfassen von Position und Lage der auf der Auflagefläche 5 aufliegenden Arzneimittelpackungen 2. Dazu steuert der Steuercomputer 6 über die Leitung 21 einen Antrieb 19 für die Infrarot-Lichtquelle 18 an, der dafür sorgt, dass sich die Infrarot-Lichtquelle 18 in Richtung des Pfeils 20, d.h. in x-Richtung bewegt. Vorzugweise beginnt die Bewegung der Infrarot-Lichtquelle 18 an dem dem Stufenförderer 3 benachbarten Rand der Auflagefläche 5 und wird dann über die gesamte Auflagefläche 5 bis zum entgegengesetzten Rand kontinuierlich fortgesetzt. Die Infrarot-Lichtquelle 18 mit ihrem Antrieb 19 ist an einer Linearführung 12 aufgehängt und geführt.

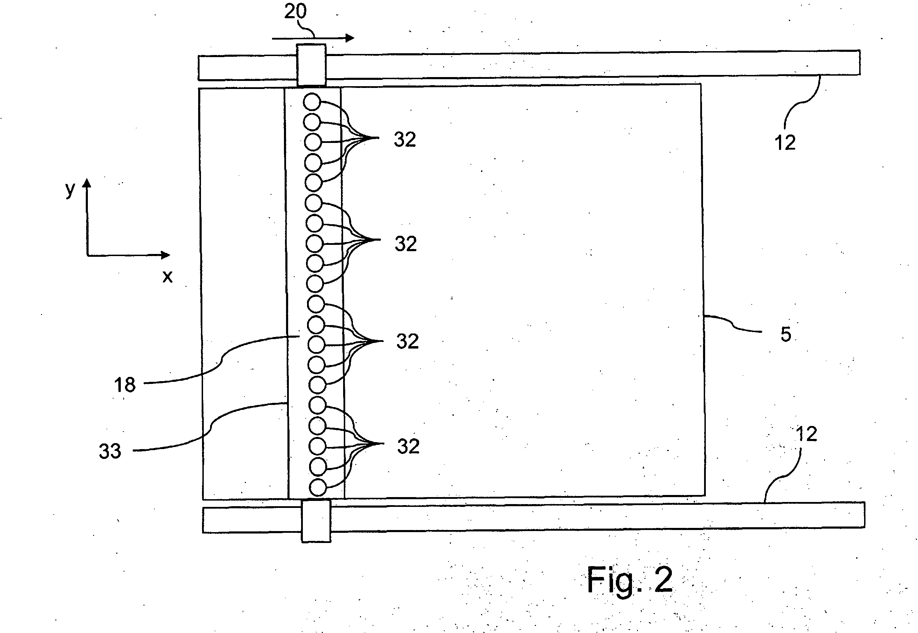

Die Infrarot-Lichtquelle 18 sendet mehrere in y-Richtung hintereinander angeordnete Lichtbündel 22 auf die Auflagefläche 5 derart, dass diese Lichtbündel 22 einen sich in y-Richtung erstreckenden schmalen Streifen 26 belichten. Zum Erzeugen der mehreren Lichtbündel 22 wird beispielsweise eine Infrarot-Lichtquelle 18 verwendet, die eine Reihe von Infrarot-LEDs 32 aufweist, wie sie in Figur 2 veranschaulicht ist. Figur 2 zeigt eine schematische Draufsicht auf die Erfassungseinrichtung der erfindungsgemäßen Vereinzelungsvorrichtung 1. In Figur 2 ist die Auflagefläche 5 dargestellt, über der zwei Linearführungen 12 angeordnet sind, an denen die Infrarot-Lichtquelle 18 gehalten und geführt ist. Die Infrarot-Lichtquelle 18 weist bei dem in Figur 2 gezeigten Beispiel zwanzig in einer Reihe entlang der y-Richtung angeordnete Infrarot-LEDs 32 auf. Die Infrarot-Lichtquelle 18 ist in Richtung des Pfeils 20 bewegbar. Während der Steuercomputer 6 den Antrieb 19 der Infrarot-Lichtquelle 18 derart ansteuert, dass sich die Infrarot-Lichtquelle 18 mit etwa konstanter Geschwindigkeit in x-Richtung über die Auflagefläche 5 hinwegbewegt, sorgt der Steuercomputer 6 über die Verbindungsleitungen 24 außerdem dafür, dass die Bildaufnahmeeinrichtung 23 eine vorgegebene Anzahl von Aufnahmen in etwa gleichen Zeitabständen erzeugt. Beispielsweise werden während des Bewegens der Infrarot-Lichtquelle 20 bis 400, vorzugsweise 40 bis 80, Aufnahmen erzeugt. Aus den während des Bewegens des belichteten Streifens erzeugten Aufnahmen der Unterseite der Auflagefläche wird eine Abbildung der Auflagefläche gewonnen, aus der die zur Ansteuerung der Handhabungseinrichtung erforderlichen Informationen über Position und Lage der aufliegenden Stückgüter gewonnen werden, wobei der zeitliche Abstand der Aufnahmen derjenigen Zeitdauer entspricht, in der sich der belichtete Streifen um eine der gewünschten Bildauflösung entsprechende Distanz bewegt. Zu jeder um die gewünschte Auflösung versetzten Position des belichteten Streifens wird eine Gesamtaufnahme der Auflagefläche gewonnen. Diese Bilder werden mit einem geeigneten Algorithmus zu einem Gesamtbild zusammengesetzt. Ein Teil der Verarbeitung kann bereits in der Bildaufnahmeeinrichtung 23 vorgenommen werden.

Die Auflagefläche 5 ist die Oberseite einer Kunststoffplatte 27, welche für das abgestrahlte Infrarotlicht durchlässig ist und dieses beim Durchtritt diffus streut. Aufgrund der diffusen Streuung gelangt das Infrarotlicht in die Kamera 23 unabhängig davon, an welcher Position auf der Auflagefläche 5 sich der belichtete Streifen 26 gerade befindet. Wird beim Überfahren der Auflagefläche 5 ein Teil der Fläche durch eine aufliegende Arzneimittelpackung 2 abgedeckt, so enthalten die von der Kamera 23 während des Überfahrens der Arzneimittelpackung 2 erzeugten Aufnahmen für diejenigen y-Koordinatenbereiche, die von der Arzneimittelpackung 2 abgedeckt sind, unbelichtete Flächen. Aus der Folge von Aufnahmen der Kamera 23, in denen sich beim Überfahren der Arzneimittelpackung 2 jeweils unbelichtete Flächen ergeben, berechnet der Steuercomputer 6 die Lagekoordinaten der aufliegenden Arzneimittelpackungen 2.

Nachdem der Steuercomputer 6 auf der Grundlage der aus der Kamera 23 eintreffenden Bildsignale die Position und Lage der auf der Auflagefläche 5 aufliegenden Arzneimittelpackungen 2 berechnet hat, kann er diese Koordinaten zur Ansteuerung einer Handhabungseinrichtung verwenden, die jeweils eine einzelne Packung 3 von der Auflagefläche 5 abhebt und auf ein Förderband 16 auflegt, wobei das Förderband 16 die Arzneimittelpackung 2 einem (in Figur 1 nicht gezeigten) Greifbereich eines Regalbediengeräts eines automatisierten Regallagers zuführt. Zu diesem Zweck ist der Steuercomputer 6 über Leitung 14 mit der Handhabungseinrichtung 8 bis 11 gekoppelt. Er ist ferner über Leitung 17 mit dem Antrieb 15 des Förderbands 16 gekoppelt.

Die Handhabungseinrichtung wird von der Linearführung 12 gehalten und geführt und weist einen Antrieb 10 auf, der die Handhabungseinrichtung in Richtung des Pfeils 13 bewegen kann. Die Handhabungseinrichtung weist bei dem in Figur 1 dargestellten Ausführungsbeispiel einen Saugkopf 9 auf, mit dem die Handhabungseinrichtung die Oberseite einer auf der Auflagefläche 5 aufliegenden Arzneimittelpackung 2 ansaugen kann, so dass die Arzneimittelpackung 2 nach oben von der Auflagefläche 5 abgehoben werden kann. Der Saugkopf 9 wird von einem in Kasten 8 befindlichen Antrieb gesteuert. Um den Saugkopf 9 in vertikaler Richtung bewegen zu können, weist die Handhabungseinrichtung einen an einer vertikalen Schiene geführten zweiten Antrieb 11 auf. Gleichzeitig ist ein weiterer Antrieb vorgesehen, mit dem der Saugkopf 9 in y-Richtung bewegt werden kann. Somit kann der Saugkopf 9 in sämtlichen drei Raumrichtungen bewegt werden. Der Steuercomputer 6 sorgt auf der Grundlage der erfassten Lagekoordinaten dafür, dass der Saugkopf 9 an einer vorgegebenen Stelle auf der Oberseite der Arzneimittelpackung 2 ansetzt, die ein sicheres Ergreifen der Arzneimittelpackung 2 gewährleistet. Die angesaugte Arzneimittelpackung 2 wird dann von der Auflagefläche 5 abgehoben und auf das Förderband 16 aufgelegt.

Ein zusätzlicher Vorteil der in Figur 1 dargestellten Ausführungsform der erfindungsgemäßen Vereinzelungsvorrichtung 1 besteht darin, dass die Linearführung 12 sowohl die bewegbare Infrarot-Lichtquelle 18 mit ihrem Antrieb 19 trägt als auch die Handhabungseinrichtung. Zu Beginn eines Vereinzelungszyklus befindet sich die Infrarot-Lichtquelle 18 auf der in Figur 1 links dargestellten Randposition, während sich die Handhabungsvorrichtung außerhalb der Auflagefläche 5, beispielsweise über dem Transportband 16, am rechten Rand der Linearführung 12 befindet. Im üblichen Verfahrensablauf wird dann zunächst die Auflagefläche 5 durch die Infrarot-Lichtquelle 18 gescannt, wobei die Infrarot-Lichtquelle 18 entlang der Linearführung 12 bewegt werden kann, ohne dass sie mit der Handhabungsvorrichtung kollidiert. Nach dem Scannen wird die Infrarot-Lichtquelle 18 wieder an den linken Rand der Linearführung 12 verfahren, so dass nunmehr die gesamte Linearführung 12 für die Bewegung der Handhabungseinrichtung zur Verfügung steht.

## Patentansprüche

1. Vorrichtung (1) zum Vereinzeln von in ein automatisiertes Lager einzulagernden Stückgütern (2) mit
einer Fördervorrichtung (3) zum Fördern von Stückgütern (3) aus einem Vorrat (4) auf eine Auflagefläche (5) einer Auffangeinrichtung (27),
einer Steuereinrichtung (6) zum Ansteuern der Fördervorrichtung (3),
einem mit der Steuereinrichtung (6) gekoppelten Sensor (7), der ein unmittelbar bevorstehendes oder tatsächliches Auftreffen von Stückgütern (2) auf der Auflagefläche (5) erfasst, wobei die Steuereinrichtung (6) das Fördern weiterer Stückgüter (2) auf die Auflagefläche (5) unterbricht, sobald das Auftreffen eines Stückguts oder mehrerer Stückgüter (2) erfasst worden ist,
einer mit der Steuereinrichtung (6) gekoppelten Erfassungseinrichtung zum Erfassen von Position und Lage der auf der Auflagefläche (5) aufliegenden Stückgüter (2), wobei die Erfassungseinrichtung eine Bildaufnahmeeinrichtung (23) aufweist, die Aufnahmen der Unterseite der Auflagefläche (5) der Auffangeinrichtung (27) erzeugt, aus der die Steuereinrichtung (6) Informationen über Position und Lage der aufliegenden Stückgüter (2) gewinnt, und
einer mit der Steuereinrichtung (6) gekoppelten Handhabungseinrichtung (8-11) zum Entnehmen eines Stückguts (2) von der Auflagefläche (5) für einen Weitertransport in das Lager, wobei die Steuereinrichtung (6) die Handhabungseinrichtung (8-11) in Abhängigkeit von den Informationen über Position und Lage gezielt derart steuert, dass sie ein einzelnes Stückgut (2) sicher ergreift, **dadurch gekennzeichnet, dass**
die Erfassungseinrichtung eine oberhalb der Auflagefläche (5) angeordnete Lichtquelle (18-19) aufweist, die wenigstens ein ausschließlich senkrecht auf die Auflagefläche (5) auftreffendes Lichtbündel (22) erzeugt, wobei das wenigstens eine Lichtbündel (22) entweder die gesamte zu erfassende Auflagefläche (5) abdeckt oder so bewegt wird, dass sukzessive die gesamte zu erfassende Auflagefläche (5) überstrichen wird, und
dass die Auffangeinrichtung (27) so ausgebildet ist, dass sie das durch die Auflagefläche (5) hindurchtretende Licht der Lichtquelle (18-19) durchlässt und dabei an jedem Ort der Auflagefläche (5) derart streut oder ablenkt, dass zumindest ein Teil des hindurchtretenden Lichts zu der Bildaufnahmeeinrichtung (23) gelenkt wird.

2. Vorrichtung (1) zum Vereinzeln nach Anspruch 1, **dadurch gekennzeichnet, dass** das Material der Auffangeinrichtung (27) unterhalb der Auflagefläche (5) das Licht der Lichtquelle (18-19) durchlässt und dabei diffus streut.

3. Vorrichtung (1) zum Vereinzeln nach Anspruch 1 oder 2, **dadurch gekennzeichnet, dass** die Auffangeinrichtung eine ebene Platte (27) umfasst, deren Oberseite die Auffangfläche (5) bildet.

4. Vorrichtung (1) zum Vereinzeln nach einem der Ansprüche 1 - 3, **dadurch gekennzeichnet, dass** die oberhalb der Auflagefläche (5) angeordnete Lichtquelle (18-19) eine Mehrzahl ausschließlich senkrecht auf die Auflagefläche (5) auftreffender Lichtbündel (22) erzeugt, wobei benachbarte Lichtbündel (22) höchstens einen einer gewünschten Auflösung entsprechenden Maximalabstand voneinander haben.

5. Vorrichtung zum Vereinzeln nach Anspruch 4, **dadurch gekennzeichnet, dass** die Lichtquelle (18-19) bewegbar ist, wobei die Lichtbündel (22) einen sich in einer ersten Richtung (y) über die Auflagefläche (5) erstreckenden Streifen (26) belichten, wobei die Steuereinrichtung (6) die bewegbare Lichtquelle (18-19) so steuert, dass der belichtete Streifen (26) sich in einer zu der ersten Richtung (y) senkrechten zweiten Richtung (x) über die Auflagefläche (5) bewegt.

6. Vorrichtung zum Vereinzeln nach Anspruch 5, **dadurch gekennzeichnet, dass** die Bildaufnahmeeinrichtung (23) während des Bewegens des belichteten Streifens (26) eine Folge von Aufnahmen der Unterseite der Auflagefläche (5) erzeugt, aus denen eine Abbildung der Auflagefläche (5) erzeugt wird, aus der die zur Ansteuerung der Handhabungseinrichtung (9-11) erforderlichen Informationen über Position und Lage der aufliegenden Stückgüter (2) gewonnen werden, wobei der zeitliche Abstand der Aufnahmen derjenigen Zeitdauer entspricht, in der sich der belichtete Streifen (26) um eine Distanz bewegt, die etwa der Breite des Streifens entspricht.

7. Vorrichtung zum Vereinzeln nach Anspruch 5 oder 6, **dadurch gekennzeichnet, dass** die Lichtquelle (18-19) eine Infrarotlichtquelle ist und die Platte (27) einen das Infrarotlicht durchlassenden und dabei diffus streuenden Kunststoff aufweist.

8. Vorrichtung zum Vereinzeln nach einem der Ansprüche 4 - 7, **dadurch gekennzeichnet, dass** die Lichtquelle (18-19) eine Vielzahl von LEDs (32) umfasst, die auf einem Träger (33) entlang der ersten Richtung (y) in gleichmäßigen Abständen nebeneinander angeordnet sind, wobei jede LED (32) ein Lichtbündel mit einem Öffnungswinkel von weniger als 5° abstrahlt.

9. Vorrichtung zum Vereinzeln nach Anspruch 8, **dadurch gekennzeichnet, dass** die LEDs (32) die Lichtbündel senkrecht nach unten abstrahlen und der Träger (33) in der zweiten Richtung (x) bewegbar ist.

10. Vorrichtung zum Vereinzeln nach Anspruch 8, **dadurch gekennzeichnet, dass** die LEDs die Lichtbündel horizontal abstrahlen und ein parallel zu einem feststehenden Träger der LEDs angeordneter, die horizontalen Lichtbündel vertikal nach unten umlenkender Spiegel in der zweiten Richtung (x) bewegbar ist.

11. Vorrichtung zum Vereinzeln nach einem der Ansprüche 5 - 10, **dadurch gekennzeichnet, dass** sich die erste Richtung (y) quer zur Transportrichtung der Fördervorrichtung (3), aus der die Stückgüter (2) auf die Auflagefläche (5) eintreffen, erstreckt.

12. Vorrichtung zum Vereinzeln nach einem der Ansprüche 5 - 11, **dadurch gekennzeichnet, dass** die Steuereinrichtung (6) die bewegbare Lichtquelle (18-19) so steuert, dass sich der belichtete Streifen (26) stetig einmal über die gesamte Auflagefläche (5) bewegt.

13. Vorrichtung zum Vereinzeln nach einem der Ansprüche 5 - 12, **dadurch gekennzeichnet, dass** die Handhabungseinrichtung (9-11) an einer über der Auflagefläche (5) montierten, sich in der zweiten Richtung (x) erstreckenden Linearführung (12) aufgehängt und geführt ist und dass die Lichtquelle (18-19) an derselben Linearführung (12) aufgehängt und geführt ist.

## Claims

1. A device (1) for separating piece goods (2) to be stored in an automated storage facility, comprising
a conveying device (3) for conveying piece goods (3) from a stock (4) to a support surface (5) of a collecting device (27),
a control device (6) for controlling the conveying device (3),
a sensor (7) that is coupled to the control device (6) and detects an immediately imminent or actual impact of piece goods (2) on the support surface (5), wherein the control device (6) interrupts the conveying of additional piece goods (2) onto the support surface (5) as soon as the impact of a piece good or several piece goods (2) has been detected,
a detecting device that is coupled to the control device (6) and serves for detecting the position and orientation of the piece goods (2) lying on the support surface (5), wherein the detecting device has an image recording device (23) that records images of the underside of the support surface (5) of the collecting device (27), from which the control device (6) obtains information concerning the position and orientation of the piece goods (2) lying on the support, and
a handling device (8-11) that is coupled to the control device (6) and serves for removing a piece good (2) from the support surface (5) for further transport into the storage facility, wherein the control device (6) controls the handling device (8-11) in a targeted manner as a function of the information concerning position and orientation such that it securely takes hold of an individual piece good (2), **characterized in that**
the detecting device has a light source (18-19) that is arranged above the support surface (5) and generates at least one light beam (22) that is incident on the support surface (5) in an exclusively perpendicular manner, wherein the at least one light beam (22) either covers the entire support surface (5) to be detected or is moved such that it successively passes over the entire support surface (5) to be detected, and
**in that** the collecting device (27) is constructed in such a way that it allows the light of the light source (18-19) passing through the support surface (5) to pass and at the same time scatters or deflects it at every point of the support surface (5) such that at least part of the light which is passing through is directed to the image recording device (23).

2. The separating device (1) according to Claim 1, **characterized in that** the material of the collecting device (27) underneath the support surface (5) allows the light of the light source (18-19) to pass and at the same time scatters it in a diffuse manner.

3. The separating device (1) according to Claim 1 or 2, **characterized in that** the collecting device comprises a flat plate (27), the upper side of which forms the collecting surface (5).

4. The separating device (1) according to one of Claims 1 - 3, **characterized in that** the light source (18-19) arranged above the support surface (5) generates a plurality of light beams (22) that are incident on the support surface (5) in an exclusively perpendicular manner, wherein adjacent light beams (22) have at most a maximum distance from one another corresponding to a desired resolution.

5. The separating device according to Claim 4, **characterized in that** the light source (18-19) is movable, wherein the light beams (22) expose a strip (26) that extends over the support surface (5) in a first direction (y), wherein the control device (6) controls the movable light source (18-19) in such a way that the exposed strip (26) moves over the support surface (5) in a second direction (x) perpendicular to the first direction (y).

6. The separating device according to Claim 5, **characterized in that** the image recording device (23) records during the motion of the exposed strip (26) a sequence of images of the underside of the support surface (5), from which a depiction of the support surface (5) is produced, from which the information concerning the position and orientation of the resting piece goods (2) required for the activation of the handling device (9-11) is obtained, wherein the time interval between the images corresponds to the time period, in which the exposed strip (26) moves by a distance that approximately corresponds to the width of the strip.

7. The separating device according to Claim 5 or 6, **characterized in that** the light source (18-19) is an infrared light source and the plate (27) has a plastic that allows the infrared light to pass and at the same time scatters it in a diffuse manner.

8. The separating device according to one of Claims 4 - 7, **characterized in that** the light source (18-19) comprises a plurality of LEDs (32) that are arranged adjacent to one another on a substrate (33) along the first direction (y) at uniform distances, wherein each LED (32) emits a light beam with an opening angle of less than 5°.

9. The separating device according to Claim 8, **characterized in that** the LEDs (32) emit the light beams vertically downward and the substrate (33) is movable in the second direction (x).

10. The separating device according to Claim 8, **characterized in that** the LEDs emit the light beams horizontally and a mirror arranged parallel to a stationary substrate of the LEDs, deflecting the horizontal light beams vertically downward, is movable in the second direction (x).

11. The separating device according to one of Claims 5 - 10, **characterized in that** the first direction (y) extends transversely to the transport direction of the conveying device (3), from which the piece goods (2) arrive onto the support surface (5).

12. The separating device according to one of Claims 5 - 11, **characterized in that** the control device (6) controls the movable light source (18-19) in such a way that the exposed strip (26) continuously moves over the entire support surface (5) in one pass.

13. The separating device according to one of Claims 5 - 12, **characterized in that** the handling device (9-11) is suspended and guided on a linear guide (12) that is mounted above the support surface (5) and extends in the second direction (x), and **in that** the light source (18-19) is suspended and guided on the same linear guide (12).

## Revendications

1. Dispositif (1) destiné à désolidariser des charges isolées (2) devant être stockées dans un entrepôt automatisé, avec
un dispositif de convoyage (3) pour convoyer des charges isolées (3) à partir d'une réserve (4) vers une surface de dépose (5) d'un système de réception (27),
un système de commande (6) pour actionner le dispositif de convoyage (3),
un capteur (7) couplé au système de commande (6) qui détecte une arrivée imminente ou effective de charges isolées (2) sur la surface de dépose (5), le système de commande (6) interrompant le convoyage de charges isolées (2) supplémentaires sur la surface de dépose (5) dès que l'arrivée d'une charge isolée ou de plusieurs charges isolées (2) a été détectée,
un système de détection couplé au système de commande (6) pour détecter la position et l'emplacement des charges isolées (2) reposant sur la surface de dépose (5), le système de détection comportant un système d'enregistrement d'images (23), qui créé des enregistrements de la face inférieure de la surface de dépose (5) du système de réception (27), à partir desquels le système de commande (6) acquiert des informations sur la position et l'emplacement des charges isolées (2) déposées et
un système de manipulation (8 à 11) couplé au système de commande (6) pour prélever une charge isolée (2) sur la surface de dépose (5) pour la retransporter dans l'entrepôt, le système de commande (6) commandant le système de manipulation (8 à 11) de manière ciblée en fonction des informations sur la position et l'emplacement, de sorte à saisir de manière sûre une charge isolée (2) individuelle, **caractérisé en ce que**
le système de détection comporte une source lumineuse (18 et 19) placée au-dessus de la surface de dépose (5) qui génère au moins un faisceau lumineux (22) qui est exclusivement incident à la verticale sur la surface de dépose (5), l'au moins un faisceau lumineux (22) couvrant soit l'ensemble de la surface de dépose (5) qui doit être détectée ou étant déplacé de sorte que l'ensemble de la surface de dépose (5) qui doit être détectée soit successivement balayée et
**en ce que** le système de réception (27) est conçu de sorte à laisser passer la lumière de la source lumineuse (18 et 19) qui traverse la surface de dépose (5) et à cet effet à la disséminer ou la dévier à chaque endroit de la surface de dépose (5) de sorte qu'au moins une partie de la lumière traversante soit dirigée vers le système d'enregistrement d'image (23).

2. Dispositif (1) destiné à désolidariser selon la revendication 1, **caractérisé en ce que** la matière du système de réception (27) en-dessous de la surface de dépose (5) laisse passer la lumière de la source lumineuse (18 et 19) et la dissémine de manière diffuse.

3. Dispositif (1) destiné à désolidariser selon la revendication 1 ou la revendication 2, **caractérisé en ce que** le système de réception comprend un plateau plan (27), dont la face supérieure forme la surface de réception (5).

4. Dispositif (1) destiné à désolidariser selon l'une quelconque des revendications 1 à 3, **caractérisé en ce que** la source lumineuse (18 et 19) placée au-dessus de la surface de dépose (5) créé une pluralité de faisceaux lumineux (22) qui sont incidents exclusivement à la verticale sur la surface de dépose (5), des faisceaux lumineux (22) voisins présentant au plus un écart mutuel maximal correspondant à une résolution souhaitée.

5. Dispositif destiné à désolidariser selon la revendication 4, **caractérisé en ce que** la source lumineuse (18 et 19) est mobile, les faisceaux lumineux (22) illuminant une bande (26) s'étendant dans une première direction (y) par-dessus la surface de dépose (5), le système de commande (6) commandant la source lumineuse (18 et 19) mobile de telle sorte que la bande (26) illuminée se déplace sur la surface de dépose (5) dans une deuxième direction (x) perpendiculaire à la première direction (y).

6. Dispositif destiné à désolidariser selon la revendication 5, **caractérisé en ce que** pendant le déplacement de la bande (26) illuminée, le système d'enregistrement d'images (23) créé une séquence d'enregistrements de la face inférieure de la surface de dépose (5) à partir desquels est créée une reproduction de la surface de dépose (5), à partir de laquelle sont acquises les informations sur la position et l'emplacement des charges isolées (2) qui sont déposées, requises pour l'actionnement du système de manipulation (9 à 11), l'écart dans le temps entre les enregistrements correspondant à la période pendant laquelle la bande (26) illuminée se déplace de la valeur d'une distance qui correspond approximativement à la largeur de la bande.

7. Dispositif destiné à désolidariser selon la revendication 5 ou la revendication 6, **caractérisé en ce que** la source lumineuse (18 et 19) est une source de lumière infrarouge et **en ce que** le panneau (27) comporte une matière plastique laissant passer la lumière infrarouge et la disséminant à cet effet de manière diffuse.

8. Dispositif destiné à désolidariser selon l'une quelconque des revendications 4 à 7, **caractérisé en ce que** la source lumineuse (18 et 19) comporte une pluralités de LED (32) qui sont placées côte à côte sur un support (33), le long de la première direction (y) à des écarts réguliers, chaque LED (32) rayonnant un faisceau lumineux avec un angle d'ouverture inférieur à 5°.

9. Dispositif destiné à désolidariser selon la revendication 8, **caractérisé en ce que** les LED (32) rayonnent le faisceau lumineux à la verticale vers le bas et le support (33) est mobile dans la deuxième direction (x).

10. Dispositif destiné à désolidariser selon la revendication 8, **caractérisé en ce que** les LED rayonnent les faisceaux lumineux à l'horizontale et **en ce qu'**un miroir placé à la parallèle d'un support stationnaire des LED, déviant à la verticale vers le bas les faisceaux lumineux horizontaux est mobile dans la deuxième direction (x).

11. Dispositif destiné à désolidariser selon l'une quelconque des revendications 5 à 10, **caractérisé en ce que** la première direction (y) s'étend à la transversale de la direction de transport du dispositif de convoyage (3) à partir de laquelle les charges isolées (2) arrivent sur la surface de dépose (5).

12. Dispositif destiné à désolidariser selon l'une quelconque des revendications 5 à 11, **caractérisé en ce que** le système de commande (6) commande la source lumineuse (18 et 19) mobile de telle sorte que la bande (26) illuminée se déplace toujours une fois sur l'ensemble de la surface de dépose (5).

13. Dispositif destiné à désolidariser selon l'une quelconque des revendications 5 à 12, **caractérisé en ce que** le système de manipulation (9 à 11) est accroché et guidé sur un guidage linéaire (12) monté au-dessus de la surface de dépose (5) s'étendant dans la deuxième direction (x) et **en ce que** la source lumineuse (18 et 19) est accrochée et guidée sur ce même guidage linéaire (12).
